# EUROPÄISCHE PATENTSCHRIFT

(11) **EP 0 438 660 B1**
(45) Veröffentlichungstag und Bekanntmachung des Hinweises auf die Patenterteilung: **04.01.1995**
(21) Anmeldenummer: 90122247.1
(22) Anmeldetag: 22.11.1990
(51) Int. Cl.: G01L 1/22, G01L 1/26

(54) **Kraftmesseinrichtung für auskragende Lasten**
Force measuring device for laterally displaced loads
Dispositif pour mesurer des forces s'exercant latéralement

(30) Priorität: 23.01.1990 DE 4001823
(43) Veröffentlichungstag der Anmeldung: 31.07.1991
(73) Patentinhaber: CARL SCHENCK AG, D-64273 Darmstadt (DE)
(72) Erfinder: Müller, Reinhard, Dr., W-7550 Rastatt 16 (DE); Rettig, Manfred, W-6109 Mühltal 4 (DE)

(56) Entgegenhaltungen:
- EP-A- 0 154 728
- DE-A- 2 518 548
- DE-A- 2 937 735
- DE-A- 3 041 826
- DE-A- 3 307 574
- DE-A- 3 608 628
- DE-B- 2 301 186
- GB-A- 2 093 191
- US-A- 4 364 279

## Beschreibung

Die Erfindung betrifft eine Kraftmeßeinrichtung zur Messung auskragender Lasten, gemäß dem Oberbegriff des Patentanspruchs 1.

In vielen Fällen müssen Lasten bzw. Kräfte während eines horizontalen oder vertikalen Transportvorgangs bestimmt werden. Dabei ist es häufig notwendig, die Lasten an oder auf überkragenden Hub- oder Schwenkvorrichtungen zu bestimmen. Derartige Hub- oder Schwenkvorrichtungen stellen häufig hydraulisch gesteuerte schwenkbare Hebelsysteme dar, wie sie insbesondere bei Hubvorrichtungen zur Steuerung schwenkbarer Arbeitskörbe an teleskopierbaren Auslegern von Fahrzeugen, an Krankentransportfahrzeugen oder Müllsammelfahrzeugen verwendet werden.

Bei der Genauigkeit von Kräftemessungen ist es wichtig, daß die zu messende Kraft immer in Meßrichtung verläuft. So kommt es häufig vor, daß die Kraftrichtung von der Meßrichtung abweicht. In solchen Fällen wirkt nur die in Meßrichtung verlaufende Kraftkomponente auf das Kraftmeßelement und erzeugt auch nur ein Signal, das nur dieser Kraftkomponente entspricht. Dies kommt insbesondere bei der Wägung von Lasten vor, bei denen die Gewichtskraft über hebelarmartige Vorrichtungen in ein Meßelement übertragen wird (auskragende Lasten). Bei solchen Wägevorrichtungen wirkt am Lagerpunkt der hebelarmartigen Vorrichtung, wie beispielsweise bei den vorgenannten Arbeitskörben an teleskopierbaren Auslegern, ein Drehmoment, das sowohl eine Kraftkomponente in Meßrichtung, als auch eine in Querrichtung enthält. Sollen derartige auskragende Lasten hingegen auch noch während eines Hubvorgangs gewogen werden, ist zusätzlich noch die Winkelstellung der Hubvorrichtungen zur Waagerechten bzw. zur Senkrechten zu berücksichtigen, da sich auch hieraus unterschiedliche Kraftkomponenten ergeben.

Aus der DE-OS 36 08 628 ist eine Vorrichtung zur Überwachung der im Betrieb wirkenden Kräfte auf einen Arbeitskorb vorbekannt. Diese Vorrichtung stellt das Gewicht eines am Ende eines teleskopierbaren Auslegers angebrachten Arbeitskorbes fest. Dabei wird der Arbeitskorb während des Hubvorgangs stets waagerecht gehalten. Dazu ist der Arbeitskorb über ein Drehlager gelenkig mit dem Ausleger verbunden. Zwischen dem Drehlager und der eigentlichen Arbeitsfläche befindet sich eine Stützanordnung, die dazu dient, daß die Gewichtskraft senkrecht in die Kraftmeßzelle eingeleitet wird. Hierzu sind an einer senkrechten Tragplatte zwei horizontale Lenker angebracht, die an einer weiteren senkrechten Halteplatte befestigt sind und an der sich auch gleichzeitig der Arbeitskorb befindet. Zwischen den beiden Lenkern ist eine Strebe angeordnet, die die Kraft in eine Kraftmeßzelle einleitet. Dadurch wird eine momentenfreie Kraftmessung gewährleistet. Diese Kraftmeßvorrichtung hat den Nachteil, daß zur momentenfreien Kraftmessung ein aufwendiger Lenkermechanismus erforderlich ist, der zusätzliche Kosten und Gewicht verursacht.

Eine Wägevorrichtung, die eine momentenfreie Gewichtsmessung auskragender Lasten ermöglicht ist aus der DE-PS 34 47 648 vorbekannt. Die Meßvorrichtung beschreibt eine Wägevorrichtung an einem Müllfahrzeug. Bei dieser Einrichtung ist an einem vertikalen Tragrohr ein parallelogrammartiger Hub- und Schwenkrahmen angelenkt, der durch einen hydraulischen Hubzylinder nach oben bewegbar ist. Parallel zum Tragrohr ist ein Gleitkörper angebracht, an den die zu wägende auskragende Last in Form einer Mülltonne angehängt wird. Dabei ist das Gleitrohr gegenüber der Vertikalen beweglich und stützt sich mit der Gewichtskraft auf eine unter dem Gleitrohr angeordnete Wägezelle ab und erzeugt ein Signal, das weitgehend der Last auf die Wägezelle proportional ist. Die Genauigkeit der Wägung hängt dabei im wesentlichen von der Reibung des Gleitrohrs ab, da durch die auskragende Last Querkräfte in das Gleitrohr eingeleitet werden, die Reibungskräfte hervorrufen, die der Gewichtskraft entgegengerichtet sind. Bei einer derartigen unvermeidlichen Reibung wird also immer ein Teil der Gewichtskraft zur Überwindung der Reibungskraft benötigt, die dann zu einer fehlerhaften Messung führt. Derartige Meßfehler sind auch rechnerisch nicht genau erfaßbar, da derartige Reibungskräfte sowohl vom Verschmutzungsgrad als auch durch Temperaturschwankungen unterschiedlich groß sein können.

Der Erfindung liegt daher die Aufgabe zugrunde, eine Kraftmeßeinrichtung der vorgenannten Art zu schaffen, mit der eine hohe Wägegenauigkeit erzielbar ist und das unter einfachster Ausgestaltung.

Diese Aufgabe wird durch die im Patentanspruch 1 angegebene Erfindung gelöst. Zweckmäßige Weiterbildungen der Erfindung sind in den Unteransprüchen angegeben.

Die Erfindung bietet den Vorteil, daß diese Kraftmeßeinrichtung sowohl für die Messung waagerecht wirkender als auch senkrecht wirkender Kräfte geeignet ist. Darüber hinaus gestattet die erfinderische Einrichtung auch den Einsatz bei Vorrichtungen, in denen momentenbehaftete Kräfte auftreten als auch in solchen Vorrichtungen, in denen nur momentenfreie Kräfte vorkommen.

Die Erfindung hat darüber hinaus noch den Vorteil, daß durch die Integration der Kraftmeßelemente in die Lagerelemente auch in bereits vorhandene Konstruktionen von Hub- oder Schwenkrahmen Kraftmeßeinrichtungen eingebaut werden können, ohne daß dazu ein großer konstruktiver Aufwand nötig wäre. Eine derartige Lösung könnte auch in bereits ausgeführten Hubrahmen nachgerüstet werden, indem lediglich die Lagerelemente ausgetauscht werden.

Weiterhin bietet die Erfindung den Vorteil, daß durch den Einsatz der Drehmeßlager zur Schaffung einer Hubmeßeinrichtung kein zusätzlicher Platz erforderlich ist und daß dies auch zu keiner nennenswerten Gewichtserhöhung führt, was insbesondere beim Einsatz an Fahrzeugen mit begrenztem Nutzgewicht vorteilhaft ist.

Da die erfindungsgemäße Meßeinrichtung das Kraftsignal unmittelbar im Drehlager erzeugt, sind keine zusätzlichen bewegten Teile zur Kraftübertragung oder Krafteinleitung erforderlich, die einem Verschleiß oder der Wartung unterliegen. Die Erfindung bietet daher eine vorteilhafte Lösung, die äußerst betriebssicher und wartungsfrei ist und reibungsbedingte Meßabweichungen vermeidet.

Die Erfindung wird anhand eines Ausführungsbeispiels, das in der Zeichnung dargestellt ist, näher erläutert. Es zeigen:
- Fig. 1:: die Vorderansicht eines Hubrahmens;
- Fig. 2:: die Seitenansicht des Hubrahmens, der an einer Halteplatte angelenkt ist;
- Fig. 3:: ein unteres Drehmeßlager des Hubrahmens;
- Fig. 4:: ein oberes Drehmeßlager für den Hubrahmen;
- Fig. 5:: eine schematische Darstellung der Kraftverhältnisse an einem Hubrahmen.

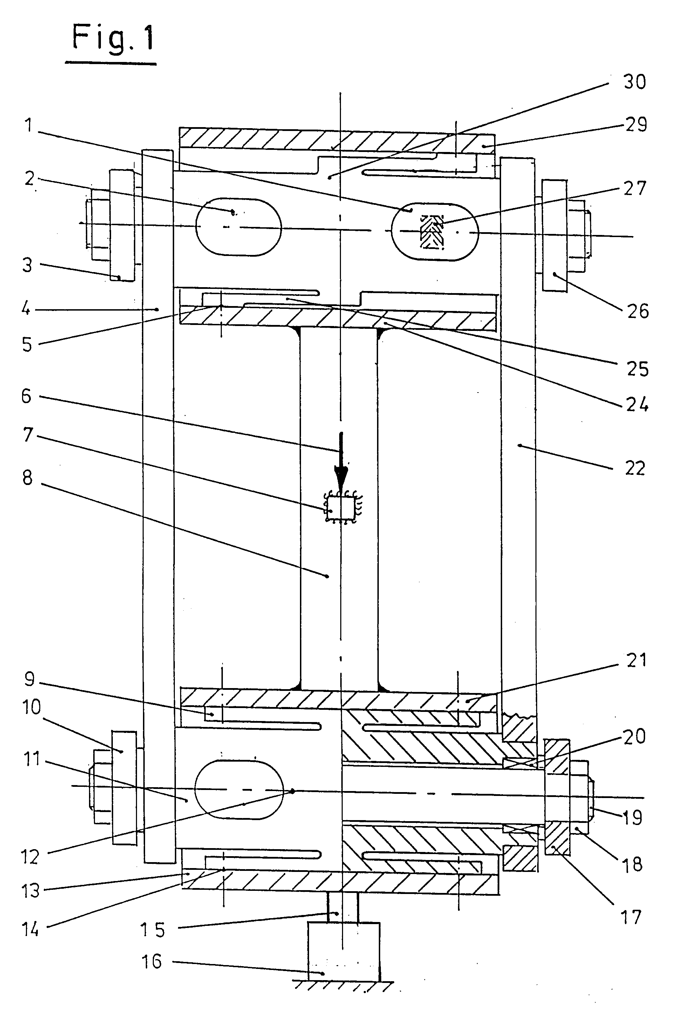

In Fig. 1 ist ein Hubrahmen dargestellt, der aus zwei Drehmeßlagern 11, 30 besteht, die durch ein Lasttragrohr 8 miteinander fest verbunden sind und die seitlich drehbar an vier Lenkerarmen 3, 10, 17, 26 aufgehängt sind.

Die vier an einer Halteplatte 34 angelenkten Lenkerarme 3, 10, 17, 26 samt Hubantrieb 15 stellen dabei die Kraftaufnahmevorrichtung dar, während die beiden Drehmeßlager 11, 30 mit dem Lasttragrohr 8 einen Teil der Krafteinleitungsvorrichtung bilden. Die beiden Drehmeßlager 11, 30 sind in einem bestimmten Abstand voneinander an dem Lasttragrohr 8 befestigt. Das Lasttragrohr 8 besteht aus einem rohrförmigen Verbindungsteil, das an seinen Enden mit quer dazu angeordneten Vierkantrohrstücken 13, 29 fest verbunden ist. Das Lasttragrohr ist in seiner Längsrichtung weitgehend vertikal angeordnet. Die Vierkantrohrstücke 13, 29 sind längsgeteilt ausgebildet und dienen zur Aufnahme der Drehmeßlager 11, 30. Das Lasttragrohr 8 verbindet die Vierkantrohrstücke etwa in der Mitte seiner gegenüberliegenden Flächenteile 21, 24 miteinander und enthält einen horizontal angebrachten Lastaufnahmehebel 7, an den die zu messende Gewichtskraft in den Lastträger 8 einleitbar ist. Der Lastaufnahmehebel 7 stellt einen Teil einer Lastaufnahmevorrichtung dar und wirkt als ein Kraftübertragungselement, das die zu messende Kraft F vom Angriffspunkt am Lastaufnahmehebel 7 über das Lasttragrohr 8 in die Kraftmeßelemente überträgt. Das Lasttragrohr 8 kann aber auch in Form mehrerer paralleler Rohrstücke ausgebildet sein.

Der Lastaufnahmehebel 7 ist dabei allerdings nur schematisch dargestellt, weil dieser praktisch als Ladefläche oder in Form beliebiger Haltearme für einzuhängende Lasten ausgebildet sein kann. Solche Ausbildungen werden an die zu messenden Lastarten angepaßt und können die unterschiedlichsten Ausgestaltungen aufweisen. Allen Ausbildungen derartiger Lastaufnahmevorrichtungen ist gemeinsam, daß sie eine Vorrichtung darstellen, die die zu messende Kraft in einem bestimmten Abstand vom Krafteinleitungspunkt aufnehmen und hebelarmartig auf das Kraftmeßelement übertragen, wodurch ein Drehmoment am Krafteinleitungspunkt wirkt.

Das untere geteilte Vierkantrohrstück 13 und das obere geteilte Vierkantrohrstück 29 dient dazu, die Gewichtskraft in die Drehmeßlager 11, 30 zu übertragen. Dazu sind sie durch Schraubverbindungen 5, 14 mit den Befestigungsvorrichtungen 44, 40, 54, 56 der Drehmeßlager 11, 30 mit diesen verbunden. Die Befestigungsvorrichtungen 40, 44 für das untere Drehmeßlager 11 bestehen aus zwei gleichartigen Befestigungsplattformen 9, die schraubbar mit dem unteren Vierkantrohrstück 13 verbunden sind.

Die Befestigungsvorrichtungen 54, 56 für das obere Drehlager 30 sind ebenfalls durch eine Schraubverbindung 5 mit dem oberen Vierkantrohrstück 29 verschraubt. Beide Vierkantrohrstücke 13, 29 sind zueinander horizontal parallel angeordnet und besitzen in etwa die gleiche Länge, die denen der beiden Drehmeßlager 11, 30 entspricht.

Die Drehmeßlager 11, 30 sind beide balkenförmig ausgebildet und enthalten in Längsrichtung eine durchgehende Bohrung 48, in der jeweils eine runde Drehachse 19 angebracht ist. Dabei ist die lichte Weite der Bohrung 48 etwas größer als der Durchmesser der Drehachse 19. Dadurch können sich die Drehmeßlager 11, 30 in vertikaler Richtung etwas durchbiegen. Die Drehachsen 19 ragen aus den Drehmeßlagern 11, 30 an jeder Seite um eine bestimmte Strecke heraus. An den überkragenden Achsenenden sind jeweils die beiden Lenkerarme 3, 10, 26 17 der Hubvorrichtung befestigt. Dabei ist jedes Drehmeßlager 11, 30 mit jeweils zwei Lenkerarmen verbunden. Die Drehachsen 19 sind an ihren Enden verjüngt und mit einem Gewindeteil versehen. Die Lenkerarme besitzen an ihren Enden jeweils eine Bohrung, die den verjüngten Teil der Drehachse 19 aufnimmt. Durch eine Sechskantmutter 18 wird jeder Lenkerarm 3, 10, 17 26 auf der Drehachse 19 festgehalten. Zwischen der Drehachse 19 und der Bohrung der Drehmeßlager ist an jedem Ende des Drehmeßlagers jeweils ein Nadellager 20 angeordnet, durch welche die Drehachse 19 drehbar in den Drehmeßlagern 11, 30 gelagert ist.

An den Enden der Drehmeßlager 11, 30 sind im Bereich der Nadellager 20 an jeder Seite der Drehmeßlager 11, 30 jeweils ein rechtes Verbindungselement 22 und ein linkes Verbindungselement 4 vorgesehen. Diese beiden Verbindungselemente 4, 22 stellen rohrförmige Streben dar und sind parallel zum Lasttragrohr 8 angebracht. Durch diese Verbindungselemente werden die Drehmeßlager 11, 30 in Meßrichtung kraftschlüssig miteinander verbunden. Dadurch ist die vertikale Kraftkomponente vom oberen Drehmeßlager 30 in das untere Drehmeßlager 11 übertragbar.

Die beiden Drehmeßlager 11, 30 enthalten horizontal und senkrecht zur Bohrung 48 für die Drehsachse 19 auf jeder der gegenüberliegenden Seiten jeweils zwei sich gegenüberliegende Sackbohrungen 1, 2, 43, 47, die symmetrisch zu einer Längsachse 12 der Drehachse 19 angeordnet sind. Die Sackbohrungen 1, 2, 43, 47 der gegenüberliegenden Seiten sind unmittelbar gegenüberliegend angebracht und besitzen einen langlochförmigen Querschnitt. Dabei sind aus der Zeichnung allerdings nur die beiden vorderen Sackbohrungen 1, 2, 43, 47 des jeweiligen Drehmeßlagers ersichtlich. Die Sackbohrungen 1, 2, 43, 47 sind symmetrisch zur Mittellinie 45 der Drehmeßlager 11, 30 vorgesehen und befinden sich jeweils zwischen dem jeweiligen Lenkerarm 3, 26, 10 17 und dem Lasttragrohr 8. Die Stirnflächen der Sackbohrungen 1, 2, 43, 47 sind eben und senkrecht zur Bohrlochrichtung ausgebildet. Auf diesen Stirnflächen sind die nicht näher dargestellten Kraftmeßelemente befestigt, die als Dehnungsmeßstreifen 27 ausgebildet sind. Jedes Drehmeßlager 11, 30 ist daher mit vier Dehnungsmeßstreifen 27 ausgestattet. Dabei sind die Dehnungsmeßstreifen 27 so ausgewählt, daß ihre Empfindlichkeit weitgehend gleiches Meßverhalten aufweist. Die Sackbohrungen 1, 2, 43, 47 sind in Bohrrichtung so tief eingebohrt, daß die Wand zur Innenbohrung hin dünnwandig ist. Dabei ist die Wandstärke so bemessen, daß auch bei kleinen Meßlasten noch ein hinreichend großes Meßsignal durch die Schubverformung in Meßrichtung erzeugbar ist.

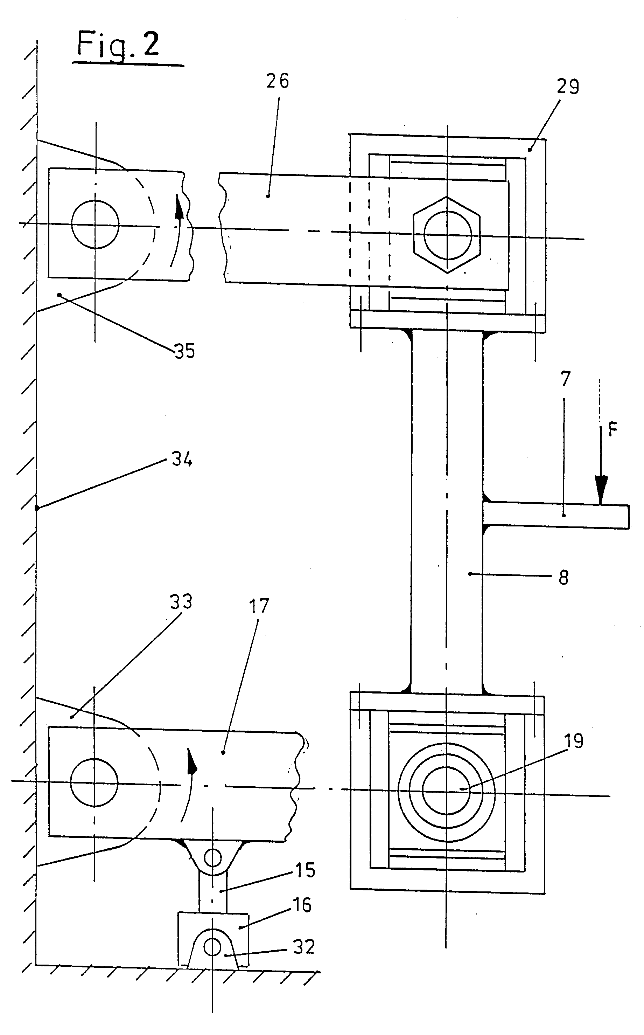

In Fig. 2 ist der an einer Halteplatte 34 angelenkte Hubrahmen dargestellt, der durch einen Hubantrieb 15 um die Anlenkpunkte 33, 35 bewegbar ist. Dazu sind an den beiden Drehmeßlagern 11, 30 zwei horizontal parallel übereinander angebrachte Lenkerarmpaare 17, 26 vorgesehen. Die Lenkerarmpaare 17, 26 sind seitlich neben den Hubrahmen an einer Halteplatte 34 drehbar befestigt. Dabei besitzen die beiden Anlenkpunkte 33, 35 vertikal den gleichen Abstand voneinander, wie die beiden Drehmeßlager 11, 30. Dadurch ist der Hubrahmen parallelogrammartig um die Anlenkpunkte 33, 35, die als Drehlager ausgebildet sind, bewegbar. Dazu ist am unteren Lenkerarmpaar 17 ein Hubantrieb 15 angelenkt, der andererseits drehbar mit der Halteplatte 34 verbunden ist. Der Hubantrieb 15 könnte aber auch an dem oberen Lenkerpaar angelenkt sein, ohne daß dies einen Einfluß auf die Meßeinrichtung hätte. Zweckmäßigerweise ist dieser Hubantrieb 15 als Hydraulikzylinder 16 ausgebildet. Die Lenkerarmpaare 17, 26 können deshalb in stufenlosen Winkelstellungen gegenüber der Halteplatte 34 gebracht und angehalten werden. Die Halteplatte 34 stellt dabei gegenüber dem Hubrahmen ein feststehendes Bauteil dar. Dabei kann die Halteplatte 34 sowohl als ein ortsfestes auch ein mit einem Fahrzeug verbundenes oder ein sonstiges Bauteil sein.

Die einzelnen Lenkerarme 3, 10, 17 26 besitzen alle die gleiche Länge und sind an ihren beiden Enden jeweils mit einer Bohrung versehen, die zur drehbaren Befestigung dient. Die Drehmeßlager 11, 30 stehen jeweils durch ein zweiteiliges Vierkantrohrstück 13, 29 mit dem Lasttragrohr 8 in Wirkverbindung. Die Vierkantrohrstücke 13, 29 bestehen in Längsrichtung aus jeweils einem u-förmigen und einem plattenförmigen Teil, die durch eine Schraubverbindung zu einem Vierkantrohr zusammengefügt sind. Dabei umgreift jedes Vierkantrohrstück 13, 29 jeweils ein Drehmeßlager 11, 30 und bildet somit auch einen Schutz der Drehmeßlager. Die Vierkantrohrstücke 13, 29 dienen gleichzeitig auch zur Aufnahme der nicht dargestellten Verbindungsleitungen, die die Dehnungsmeßstreifen 27 mit einer nicht dargestellten Auswerte- und Anzeigeeinrichtung zur Festlegung bzw. Anzeige der absoluten Kraftmeßwerte verbindet. Dabei stellen die Drehmeßlager 11, 30 mit dem Lasttragrohr 8, den Verbindungselementen 4, 22 und dem Lastaufnahmehebel 7 samt Lastaufnahmevorrichtung die Krafteinleitungsvorrichtung dar.

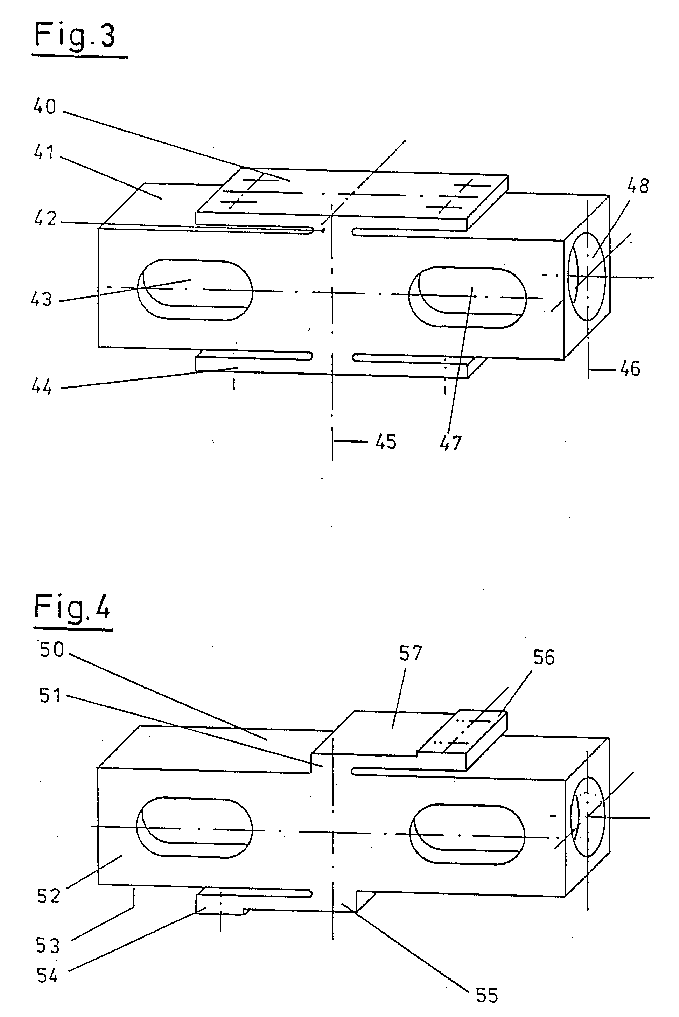

In Fig. 3 ist das untere Drehmeßlager 11 dargestellt, welches zwischen den mit dem Hubantrieb versehenen unteren Lenkerarmen 10, 17 vorgesehen ist. Dieses Drehmeßlager 11 ist in Form eines Vierkantbalkens 41 ausgebildet, der in Längsrichtung eine durchgehende Bohrung 48 aufweist. Die Bohrung 48 verläuft dabei durch den Mittelpunkt der Querschnittsfläche des Vierkantbalkens. Die Drehmeßlager können aber auch zylinderförmig ausgestaltet sein. Die Vierkantform hat sich dabei im Hinblick auf die Befestigungsmöglichkeiten und im Bezug auf die Aufnahme von Querkräften als zweckmäßig erwiesen. Der Querschnitt der Drehmeßlager ist in etwa quadratisch. Er könnte aber auch rechteckförmig sein. Dabei wäre im Bezug auf die Signalauswertung eine möglichst große Tiefe gegenüber der Höhe anzustreben. Soweit aber beide Drehlagerelemente mit Dehnungsmeßstreifen 27 ausgestattet werden, sind auch Drehmeßlager mit geringerer Tiefe einsetzbar. Hierdurch sind dann platzsparende Hubrahmen verwendbar.

Das untere Drehmeßlager 12 ist mit vier Sackbohrungen 43, 47 versehen, die jeweils horizontal und quer zur Längsachse 12 angebracht sind. Dabei sind jeweils zwei Bohrungen gegenüberliegend und symmetrisch zur Längsachse 12 angeordnet. Alle Sackbohrungen 43, 47 besitzen die gleiche Tiefe und sind deshalb auch symmetrisch zu einer vertikalen Mittellinie 46, die auch durch den Mittelpunkt der Längsbohrung verläuft.

Für die Meßfunktion ist es nicht erforderlich, daß die Drehmeßlager 11, 30 in horizontaler Längsrichtung länger sind als in vertikaler Richtung. Für die Funktion ist lediglich entscheidend, daß die Dehnungsmeßstreifen 27 horizontal seitlich neben dem Krafteinleitungsort angeordnet sind, so daß die vertikale Schubverformung zu einem zur eingeleiteten Kraft proportionalen Signal führt.

Zur Krafteinleitung ist das untere Drehmeßlager 11 mit zwei gegenüberliegenden Befestigungsplattformen 40, 44 als Befestigungselemente versehen, die durch einen in der Mitte angeordneten Steg 42 mit dem Balken 41 des Drehmeßlagers 11 verbunden sind. Dabei ist das Drehmeßlager 11 mit einer oberen Plattform 40 und einer unteren Plattform 44 versehen, die horizontal parallel zum Balken 41 angeordnet sind. An diese Befestigungsplattformen 40, 44 ist das Lasttragrohr 8 anschraubbar. Die Dicke der Plattform ist dabei so gewählt, daß eine starre Verbindung des Lasttragrohrs 8 mit dem Drehmeßlager 11 gewährleistet ist. Dabei wird die zu messende Kraft über die Stege in die Drehmeßlager 11, 30 eingeleitet.

In einer besonderen Ausführungsform könnte das Drehmeßlager zweckmäßigerweise auch so ausgebildet sein, daß die Befestigungsvorrichtung an den Flächen der Sacklöcher befestigt wird. Dabei müßte aber auch sichergestellt werden, daß der oder die Krafteinleitungsorte sich horizontal seitlich neben den Sacklöchern befinden. Eine derartige Ausführungsform ist aber nur dann sinnvoll, wenn es auf die Einbautiefe der Hubrahmenkonstruktion nicht ankommt.

In Fig. 4 ist ein Drehmeßlager 30 für das obere Lenkerpaar 3, 26 dargestellt. Dieses Drehmeßlager 30 entspricht bis auf die Befestigungselemente 54, 56 dem Drehmeßlager 11 für das untere Lenkerarmpaar. Dabei kommt es nicht auf die örtliche Lage des Drehmeßlagers an, sondern nur darauf, daß dieses Drehmeßlager 30 nicht für Lenkerarme geeignet ist, die mit einem Hubantrieb verbunden sind. Bei einer Kraftmeßeinrichtung, bei der die beiden oberen Lenkerarme mit einem Hubantrieb 15, 65 versehen sind, wäre deshalb das untere Drehmeßlager 11 an den oberen Lenkerarmen 3, 26 und das obere Drehmeßlager 30 an den unteren Lenkerarmen 10, 17 zu befestigen. Deshalb ist dieses Drehmeßlager 30 an seiner Ober- und Unterseite mit jeweils einem elastischen Befestigungselement 54, 56 ausgestattet. Jedes Befestigungselement 54, 56 ist blattfederartig ausgebildet und über mittlere Stege 55, 51 mit dem Balken 41 des Drehmeßlagers 30 verbunden. Das Blattfederteil 57 ist dabei horizontal und parallel zur oberen Balkenfläche 50 angeordnet. Dabei wird die Federwirkung dadurch erzielt, daß die Materialdicke entsprechend der gewünschten Federkonstante dünn ausgebildet ist. Das Blattfederteil 57 ist horizontal nur nach einer Seite hin ausgerichtet und endet mit einem Anschraubteil, das mit dem oberen Vierkantrohr 29 verbindbar ist. Das gleiche Befestigungselement 54 ist auch an der unteren Balkenfläche 53 angeordnet, allerdings seitlich in entgegengesetzter Richtung. Bei dem oberen und unteren Befestigungselement 54, 56 ist entscheidend, daß die Elastizität in Wägerichtung wirkt, während das Blattfederteil horizontal senkrecht zur Wägerichtung biegesteif sein muß, um die horizontale Querkraftkomponente ungefedert übertragen zu können.

Gleichfalls könnte das Lasttragrohr 8 auch an der vorderen und hinteren vertikalen Balkenfläche 52 befestigt sein. Bei einer weiteren Ausführungsform könnte die Befestigung auch durch plattenförmige gummiartige Befestigungselemente erfolgen. Dabei müßte die elastische Schicht so ausgebildet sein, daß die horizontalen Querkräfte senkrecht zur Wägerichtung im wesentlichen ungefedert übertragen werden, während in Wägerichtung eine Federwirkung erwünscht ist. Hierfür könnten flache, plattenartige Gummiteile zwischen dem Lasttragrohr 8 und dem Drehmeßlager 30 angeordnet werden. Dabei wären die plattenförmigen Gummiteile an der vorderen und hinteren vertikalen Balkenfläche so anzubringen, daß die größeren Flächenteile am Balken anliegen, wodurch die Elastizität hauptsächlich in Wägerichtung wirkt.

Bei einer weiteren Ausführungsform könnte das obere Drehmeßlager 30 auch genauso ausgebildet sein wie das untere Drehmeßlager 11. Dies wäre dann entsprechend bei der Wägesignalauswertung zu berücksichtigen, da dann beide gleichartigen Drehmeßlager jeweils ein Meßsignal erzeugen, das der halben Gewichtskraft entspricht.

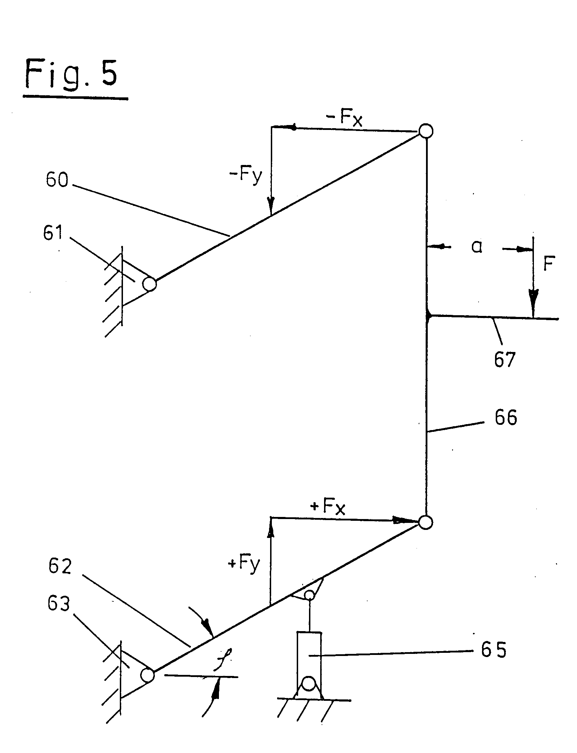

In Fig. 5 sind die Kraftwirkungen in der vorbeschriebenen Kraftmeßeinrichtung schematisch dargestellt. Dabei ist zwischen den beiden Lagerpunkten A und B kräftemäßig das Lasttragrohr 66 schematisch angeordnet, das die Kraft in die beiden Lenkerarmpaare 60, 62 überträgt, die drehbar an zwei vertikalen Befestigungspunkten 61, 63 angelenkt sind. Dabei wird die Gewichtskraft F in einem auskragenden Abstand a vertikal in den schematisch dargestellten Lasteinleitungshebel 67 eingeleitet. Die beiden parallel übereinander angeordneten Lenkerpaare 61, 63 sind gegenüber der Waagerechten um einen bestimmten Winkel nach oben geschwenkt.

Wird nun in den Lasteinleitungshebel 67 eine bestimmte Gewichtskraft eingeleitet, so entsteht durch das auskragende Gewicht ein Moment um die Lagerpunkte A und B. Durch die Lenkerarmstellung wirken in den Lagern eine waagerechte Kraftkomponente Fₓ und eine senkrechte Kraftkomponente F_{y}. Da durch den schematisch dargestellten Hubantrieb 65 im unteren Lenkerarmpaar 62 nur die senkrechte Kraftkomponente F_{y} aufgenommen wird, verbleiben im dargestellten Lenkerarmsystem noch die waagerechten Kraftkomponenten Fₓ als Querkräfte. Bei einem Wägesystem führen solche Querkräfte zu Meßungenauigkeiten, die vermieden werden müssen. Dies ist insbesondere schwierig, wenn auskragende hebbare Lasten gewogen werden sollen, da schon durch die verschiedenen Hubstellungen die waagerechte Kraftkomponente unterschiedlich groß ist. Deshalb wurden bisher Vorsatzrahmen vor den Lastträgerrahmen angeordnet, um nur die senkrechte Kraftkomponente in die Kraftmeßelemente einzuleiten.

Aus der Erkenntnis, daß die Querkräfte Fₓ in jedem Drehlager gleich groß aber entgegengesetzt gerichtet sind, wurde der Gedanke abgeleitet, die Kräfte in jedem Drehlager zu messen und miteinander zu koppeln. Dadurch konnten auf einfache Weise die Querkräfte aus dem Meßergebnis eliminiert werden, so daß stets nur die senkrechte Kraftkomponente als kraftproportionales Meßsignal erscheint. Dadurch ist bei einer Wägeeinrichtung stets das Gewicht bestimmt, wobei dies unabhängig von der Länge des schematisch dargestellten Lasteinleitungshebels 67 und der Winkelstellung der Lenkerarme 60, 62 ist.

Deshalb kommt es erfindungsgemäß in erster Linie auf die spezielle Ausbildung der Drehmeßlager an, die in viele bereits bekannte Hubrahmen integrierbar sind. Dazu sind in den Drehmeßlagern an bestimmten verformbaren senkrechten Flächenteilen Dehnungsmeßstreifen angebracht, die stets in Kraftrichtung ausgerichtet bleiben. Dabei lag ein wesentlicher erfinderischer Gedanke darin, die Kraftmeßelemente in die Drehmeßlager zu integrieren, da diese bei allen beliebigen Hubstellungen ihre Lage zur Meßrichtung nicht verändern und damit eine selbsttätige Nachführung der Meßsysteme zur Meßrichtung bewirken, obwohl sich die Richtung der Kraftableitung während der verschiedenen Hubstellungen verändert.

Im Grunde könnte ein derartiges System auch mit nur einem Drehmeßlager ausgestaltet werden. Dann müßte aber gewährleistet sein, daß keine Querkräfte das Meßergebnis beeinflussen. Hierzu müßte das die Kraft aufnehmende untere Drehmeßlager horizontal und senkrecht zur Meßkraft biegesteif ausgebildet sein, so daß eine Schubverformung nur in Meßrichtung möglich wäre.

In einer solchen vorteilhaften Ausführungsvariante wird das untere Drehmeßlager so ausgebildet, daß das Drehmeßlager im wesentlichen nur in senkrechter Richtung verformbar ist, so daß die Dehnungsmeßstreifen nur im unteren Drehlager erforderlich sind, während das obere Lager als reines Drehlager ausgebildet ist. Das untere Drehlager ist dabei symmetrisch zur Drehachse mit Flächenelementen ausgestattet, deren horizontale Balkentiefe groß gegenüber der vertikalen Balkenhöhe ist. Die durch die Dehnungsmeßstreifen erzeugten Signale werden dann in herkömmlicher Weise ausgewertet, so daß ein der eingeleiteten Kraft proportionales Signal erzeugt wird. Dies ist in herkömmlicher Weise auswertbar und kann als Gewicht angezeigt werden.

Da eine solche Ausbildungsform häufig aus räumlichen Gründen nicht möglich ist, verwendet eine erfindungsgemäße Ausgestaltung zwei Drehmeßlager, deren Meßsignale additiv miteinander verknüpft werden, so daß die quer zur Meßrichtung wirkenden Kraftkomponenten sich gegenseitig aufheben. Dadurch wird der das Meßeergebnis verfälschende Einfluß der Querkräfte aufeinfache Weise eliminiert.

Um bei diesem Hubsystem eine möglichst genaue Kraftmessung auch bei großen Anstellungswinkeln der Lenkerarme zu gewährleisten, ist bei einer besonderen Ausführungsvariante der Hubrahmen mit seitlichen Verbindungselementen versehen, die das obere Drehmeßlager in Meßrichtung kraftschlüssig mit dem unteren Drehmeßlager verbinden. Deshalb ist das obere Drehmeßlager in Meßrichtung auch federnd aufgehängt, so daß es lediglich die Querkraftkomponente aufnimmt. Dabei tritt eine Verfälschung des Meßergebnisses bei großen Anstellungswinkeln deshalb auf, weil infolge der Meßkraftwirkung und des Anstellungswinkels Reaktionskräfte in den Anlenkpunkten wirken, die erheblich über der zu messenden Kraft liegen. Da es bei solchen Kraftmeßeinrichtungen nicht auf die jeweilige Winkelstellung der Lenkerarme gegenüber der horizontalen bzw. vertikalen Bezugsebene ankommt, gestatten diese Einrichtungen auch Kraftmessungen während des Hubvorgangs. Hierbei ist lediglich die Hubbeschleunigung zu erfassen und zu berücksichtigen.

Alle bisher beschriebenen Drehmeßlager können auch mit anderen Kraftmeßelementen ausgestattet sein, soweit sie ein Signal erzeugen, das in einem bestimmten Verhältnis zur erzeugbaren Schubverformung steht.

Bei einer anderen Kraftmeßeinrichtung können die nebeneinanderliegenden Lenker auch jeweils als ein einzelner Lenker ausgebildet sein, der über die nötige Breite zur Aufnahme der Drehmeßlager verfügt. Dieser vereinigt praktisch die beiden Lenker durch eine seitliche Verbindung miteinander.

Darüber hinaus kann der Hubrahmen auch so ausgebildet sein, daß jeder Lenkerarm in der Mitte des Tragrahmens drehbar gelagert ist, während die Krafteinleitung dann davon seitlich erfolgt.

Die erfindungsgemäßen Drehmeßlager sind auch zur Gewichtsmessung von Arbeitskörben an Auslegern und Hubplattformen an Kraftfahrzeugen einsetzbar. Hierbei ist lediglich erforderlich, daß die mit dem Gewicht belasteten Arbeitskörbe oder Plattformen stets waagerecht ausgerichtet werden.

Die erfindungsgemäße Kraftmeßeinrichtung eignet sich auch für horizontal wirkende Kräfte, die über einen Hebelarmmechanismus in zwei parallelogrammartig bewegbare Drehmeßlager eingeleitet werden. Dabei können die Kräfte sowohl auskragend als auch zwischen den Drehmeßlagern in die Kraftmeßeinrichtung einleitbar sein. Das gleiche gilt auch für Kraftmeßeinrichtungen, bei denen die zu messende Kraft vertikal einleitbar ist und bei der die Drehmeßlager nicht unmittelbar senkrecht übereinander, sondern horizontal nebeneinander oder horizontal versetzt übereinander angeordnet sind. Denn in jedem Fall entstehen durch die hebelarmartige Krafteinleitung Drehmomente, die Querkraftkomponenten enthalten, die durch den Einsatz der beiden Drehmeßlager aus dem Meßergebnis eliminierbar sind.

## Patentansprüche

1. Kraftmeßeinrichtung zur Messung auskragender Lasten, bei der eine Krafteinleitungsvorrichtung (8, 11, 30) gegenüber einer Kraftaufnahmevorrichtung (3, 10, 15, 17, 26) bewegbar gelagert ist, wobei die Krafteinleitungsvorrichtung über hebelarmartige Kraftübertragungselemente verfügt, die die zu messende Kraft in mindestens ein Kraftmeßelement einleitet, dadurch gekennzeichnet, daß die Krafteinleitungsvorrichtung mindestens ein Drehmeßlager (11, 30) enthält, das mindestens über ein integriertes Kraftmeßelement (27) verfügt, wobei das Drehmeßlager (11, 30) so angeordnet ist, daß es die Krafteinleitungsvorrichtung drehbar mit der Kraftaufnahmevorrichtung verbindet und so ausrichtbar ist, daß die Meßrichtung stets die Kraftrichtung ist oder parallel zur Kraftrichtung verläuft.

2. Kraftmeßeinrichtung nach Anspruch 1, dadurch gekennzeichnet, daß das Drehmeßlager (11, 30) balkenförmig ausgebildet ist und über einen rechteckigen Querschnitt verfügt und eine durchgehende Bohrung (48) besitzt, die in Längsrichtung durch den Querschnittsmittelpunkt verläuft, wobei das Drehmeßlager (11, 30) symmetrisch zu einer senkrecht zur Längsrichtung verlaufenden Mittellinie (45) zwei Sackbohrungen (43, 47) enthält, denen zwei weitere Sackbohrungen gegenüberstehen und auf deren ebenen Stirnflächen Dehnungsmeßstreifen angebracht sind.

3. Kraftmeßeinrichtung nach Anspruch 2, dadurch gekennzeichnet, daß die Sackbohrungen (43, 47) so tief vorgesehen sind, daß der verbleibende Flächenteil bei Krafteinleitung in Kraftrichtung verformbar ist, so daß durch die Dehnungsmeßstreifen (27) ein elektrisches Signal erzeugbar ist, das der eingeleiteten Kraft proportional ist.

4. Kraftmeßeinrichtung nach Anspruch 3, dadurch gekennzeichnet, daß das Drehmeßlager (11, 30) durch eine in der durchgehenden Bohrung (48) befindliche Drehachse (19) seitlich mit der Kraftaufnahmevorrichtung verbunden ist.

5. Kraftmeßeinrichtung nach Anspruch 4, dadurch gekennzeichnet, daß das Drehmeßlager (11, 30) Befestigungselemente (40, 44, 54, 56) besitzt, die mit den hebelarmartigen Kraftübertragungselementen (7, 8) verbunden sind und die die zu messende Kraft im wesentlichen im Bereich der Mittellinie (45) in das Drehmeßlager (11, 30) einleiten.

6. Kraftmeßeinrichtung nach Anspruch 5, dadurch gekennzeichnet, daß die Kraftmeßeinrichtung als Hubwägeeinrichtung zur Wägung auskragender Lasten ausgebildet ist, die aus einer parallelogrammartigen Hubvorrichtung besteht, die um mindestens zwei horizontal übereinander angeordnete Anlenkpunkte (33, 35) schwenkbar ist und die über mindestens zwei horizontal übereinander liegende Drehmeßlager (11, 30) verfügt, die auf der Kraftaufnahmeseite mit einem Lenkerpaar (3, 26) und auf der Krafteinleitungsseite miteinander verbunden sind, wobei mindestens eines der beiden Lenkerpaare (60, 62) mit einen Hubantrieb (15, 65) versehen ist, durch den die Hubvorrichtung anhebbar ist.

7. Kraftmeßeinrichtung nach Anspruch 6, dadurch gekennzeichnet, daß die Drehmeßlager (11, 30) mit einem Lasttragrohr (8) verbunden sind, das ein Teil der Kraftübertragungselemente darstellt und an dem die auskragende Lastaufnahmevorrichtung (7) befestigt ist.

8. Kraftmeßeinrichtung nach Anspruch 7, dadurch gekennzeichnet, daß das Drehmeßlager (30), das an den Lenkern (3, 26) ohne Hubantrieb (15, 65) befestigt ist, über einen elastischen Werkstoff mit dem Lasttragrohr (8) verbunden ist, wobei das elastische Material so ausgebildet ist, daß die Elastizität weitgehend nur in Wirkrichtung der zu messenden Kraft wirksam ist.

9. Kraftmeßeinrichtung nach Anspruch 8, dadurch gekennzeichnet, daß das Drehmeßlager (30), das an den Lenkern (3, 26) ohne Hubantrieb (15, 65) befestigt ist, federnde Befestigungselemente (54, 56) enthält, an denen das Lasttragrohr (8) schraubbar befestigt ist.

10. Kraftmeßeinrichtung nach Anspruch 9, dadurch gekennzeichnet, daß die beiden parallel zueinander angeordneten Drehmeßlager (11, 30) im Bereich ihrer Lagerpunkte durch zwei außenliegende Verbindungselemente (4, 22) kraftschlüssig miteinander verbunden sind.

11. Kraftmeßeinrichtung nach Anspruch 10, dadurch gekennzeichnet, daß das Drehlagerelement (30), das an den Lenkern (3, 26) ohne Hubantrieb (15, 65) befestigt ist, als Drehlager und daß das Drehlagerelement, das an den Lenkern (10, 17) mit Hubantrieb (15, 65) befestigt ist, als Drehmeßlager (11) ausgebildet ist, wobei der Balken (52) des Drehmeßlagers ein Querschnittsverhältnis von Höhe zu Tiefe aufweist, bei der er senkrecht zur Längsrichtung und senkrecht zur Meßrichtung weitgehend biegesteif ist.

## Claims

1. Force-measuring arrangement for measuring projecting loads, in which a force-introducing device (8, 11, 30) is mounted so as to be movable relative to a force take-up device (3, 10, 15, 17, 26), the force-introducing device having force-transferring elements of the lever arm type which introduce the force to be measured into at least one force-measuring element, characterised in that the force-introducing device contains at least one rotary measurement bearing (11, 30) which has at least one integrated force-measuring element (27), the rotary measurement bearing (11, 30) being disposed so that it connects the force-introducing device rotatably to the force take-up device and can be aligned so that the direction of measurement is always the direction of force or runs parallel to the direction of force.

2. Force-measuring arrangement according to Claim 1, characterised in that the rotary measurement bearing (11, 30) is constructed like a beam and has a rectangular cross-section as well as a through bore (48) which extends in the longitudinal direction through the centre point of the cross-section, wherein the rotary measurement bearing (11, 30) has two blind holes (43, 47) symmetrically with respect to a central line (45) running perpendicular to the longitudinal direction, and the said blind holes have two further blind holes lying opposite them and have strain gauges attached to the flat end faces thereof.

3. Force-measuring arrangement according to Claim 2, characterised in that the blind holes (43, 47) are so deep that when force is introduced the remaining surface part is deformable in the direction of force so that an electrical signal proportional to the introduced force can be generated by the strain gauge (27).

4. Force-measuring arrangement according to Claim 3, characterised in that the rotary measurement bearing (11, 30) is laterally connected to the force take-up device by a rotary axle (19) located in the through bore (48).

5. Force-measuring arrangement according to Claim 4, characterised in that the rotary measurement bearing (11, 30) has fixing elements (40, 44, 54, 56) which are connected to the force-transferring elements (7, 8) of the lever arm type and which introduce the force to be measured into the rotary measurement bearing (11, 30) substantially in the region of the central line (45).

6. Force-measuring arrangement according to Claim 5, characterised in that the force-measuring arrangement is constructed as a lifting and weighing arrangement for weighing projecting loads which consists of a lifting device in the shape of a parallelogram which is pivotable about at least two articulation points (33, 35) arranged horizontally above one another and has at least two rotary measurement bearings (11, 30) lying horizontally above one another which are connected to a pair of guide rods (3, 26) on the force take-up side and to one another on the force introduction side, at least one of the two pairs of guide rods (60, 62) being provided with a lifting drive (15, 65) by which the lifting device can be raised.

7. Force-measuring arrangement according to Claim 6, characterised in that the rotary measurement bearings (11, 30) are connected to a load-bearing tube (8) which constitutes a part of the force-transferring elements and on which the projecting load take-up device (7) is fixed.

8. Force-measuring arrangement according to Claim 7, characterised in that the rotary measurement bearing (30) which is fixed on the guide rods (3, 26) without a lifting drive (15, 65) is connected by an elastic material to the load-bearing tube (8), the elastic material being so constructed that the elasticity is largely effective only in the direction of action of the force to be measured.

9. Force-measuring arrangement according to Claim 8, characterised in that the rotary measurement bearing (30) which is fixed on the guide rods (3, 26) without a lifting drive (15, 65) contains resilient fixing elements (54, 56) on which the load-bearing tube (8) is fixed by screwing.

10. Force-measuring arrangement according to Claim 9, characterised in that the two rotary measurement bearings (11, 30) disposed parallel to one another are connected to one another in a force-locking manner in the region of their bearing points by two external connecting elements (4, 22).

11. Force-measuring arrangement according to Claim 10, characterised in that the rotary bearing element (30) which is fixed on the guide rods (3, 26) without a lifting drive (15,65) is constructed as a pivot bearing and that the rotary bearing element which is fixed on the guide rods (10, 17) with a lifting drive (15, 65) is constructed as a rotary measurement bearing (11), the beam (52) of the rotary measurement bearing having a cross-sectional ratio of height to depth at which it is largely resistant to bending perpendicular to the longitudinal direction and perpendicular to the direction of measurement.

## Revendications

1. Dispositif de mesure de forces destiné à mesurer des charges en porte-à-faux, dans lequel un dispositif de transmission des forces (8, 11, 30) est monté de manière à pouvoir se déplacer par rapport à un dispositif d'absorption des forces, le dispositif de transmission disposant d'éléments de transmission à la manière de bras de levier, qui transmettent la force à mesurer dans au moins un élément de mesure de forces, caractérisé en ce que le dispositif de transmission des forces contient au moins un palier tournant de mesure (11, 30), qui dispose d'au moins un élément de mesure de forces (27) intégré, le palier tournant de mesure (11, 30) étant situé de manière à relier le dispositif de transmission de force en rotation avec le dispositif d'absorption de force (3, 10, 15, 17, 26) et peut être orienté de manière que la direction de mesure soit toujours la direction de la force ou soit parallèle à celle-ci.

2. Dispositif de mesure de forces selon la revendication 1, caractérisé en ce que le palier tournant de mesure (11, 30) est en forme de poutre et présente une section transversale rectangulaire ainsi qu'un trou (48) traversant qui , dans la direction longitudinale, passe par le centre de la section transversale, le palier (11, 30) contenant, symétriquement par rapport à une ligne médiane (45) perpendiculaire à la direction longitudinale, deux trous borgnes (43, 47) auxquels font face deux autres trous borgnes et sur les faces frontales planes desquels sont placées des bandes extensométriques.

3. Dispositif de mesure de forces selon la revendication 2, caractérisé en ce que les trous borgnes (43, 47) sont prévus suffisamment profonds pour que la partie de surface restante soit déformable en cas de transmission de forces dans la direction de celles-ci, de manière que les bandes extensométriques (27) produisent un signal électrique qui est proportionnel à la force transmise.

4. Dispositif de mesure de forces selon la revendication 3, caractérisé en ce que le palier tournant de mesure (11, 30) est relié latéralement avec le dispositif d'absorption des forces, par un axe de rotation (19) se trouvant dans le trou traversant (48).

5. Dispositif de mesure de forces selon la revendication 4, caractérisé en ce que le palier (11), 30) possède des éléments de fixation (40, 44, 54, 56), qui sont reliés aux éléments de transmission des forces (7, 8) en forme de bras de levier et qui transmettent la force à mesurer essentiellement dans la zone de la ligne médiane (45), dans le palier (11, 30).

6. Dispositif de mesure de forces selon la revendication 5, caractérisé en ce que celui-ci est un dispositif de pesée de levage pour la pesée de charges en porte-à-faux, qui est constitué d'un dispositif de levage en parallélogramme, lequel peut pivoter autour d'au moins deux points d'articulation (33, 35) superposés et qui dispose d'au moins deux paliers tournants de mesure (11, 30) superposés horizontalement, qui sur le côté de l'absorption des forces sont reliés avec une paire de bras oscillants (3, 26) et sur le côté de transmission des forces sont reliés entre eux l'une au moins des deux paires de bras oscillants (60, 62) étant pourvue d'un mécanisme de levage (15, 65) permettant de relever le dispositif de levage.

7. Dispositif de mesure de forces selon la revendication 6, caractérisé en ce que les paliers (11, 30) sont reliés à un tube porte-charge (8), qui constitue une partie des éléments de transmission des forces et sur lequel est fixé le dispositif de support de charge (7) en porte-à-faux.

8. Dispositif de mesure de forces selon la revendication 7, caractérisé en ce que le palier tournant de mesure (30), qui est fixé sur les bras oscillants (3, 26) sans mécanisme de levage (15, 16), est relié aux tubes porte-charge (8) par un matériau élastique le matériau élastique étant tel que l'élasticité n'opère pratiquement que dans la direction d'action de la force à mesurer.

9. Dispositif de mesure de forces selon la revendication 8, caractérisé en ce que le palier (30), qui est fixé sur les bras oscillants (3, 26) sans mécanisme de levage (15, 65), contient des éléments de fixation (54, 56) formant ressort, sur lesquels est fixé par vissage le tube porte-charge (8).

10. Dispositif de mesure de forces selon la revendication 9, caractérisé en ce que les deux paliers (11, 30), parallèles entre eux, sont reliés entre eux par force dans la zone de leurs points d'appui, par deux éléments de liaison (4, 22) extérieurs.

11. Dispositif de mesure de forces selon la revendication 10, caractérisé en ce que l'élément d'appui tournant (30), qui est fixé sur les bras oscillants (3, 26) sans mécanisme de levage (15, 65), est conçu à la manière d'un palier tournant et en ce que l'élément d'appui tournant, qui est fixé sur les bras oscillants (10, 17) avec mécanisme de levage (15, 65), est conçu à la manière d'un palier tournant de mesure (11), la poutre (52) du palier tournant de mesure présentant un rapport entre la hauteur et la profondeur de la section transversale tel qu'elle soit pratiquement rigide à la flexion perpendiculairement à la direction longitudinale et perpendiculairement à la direction de mesure.
